(19) Europäisches Patentamt
European Patent Office
Office européen des brevets

(11) **EP 2 911 524 B2**

(12) **NOUVEAU FASCICULE DE BREVET EUROPEEN**
Après la procédure d'opposition

(45) Date de publication et mention de la décision concernant l'opposition:
**14.08.2019 Bulletin 2019/33**

(45) Mention de la délivrance du brevet:
**27.07.2016 Bulletin 2016/30**

(21) Numéro de dépôt: **13815025.5**

(22) Date de dépôt: **28.10.2013**

(51) Int Cl.:
**A23L 33/17** *(2016.01)*   **A23J 3/14** *(2006.01)*
**A21D 13/06** *(2017.01)*

(86) Numéro de dépôt international:
**PCT/FR2013/052563**

(87) Numéro de publication internationale:
**WO 2014/068226 (08.05.2014 Gazette 2014/19)**

(54) **PROCÉDÉ DE FABRICATION DE COMPOSITIONS PROTÉIQUES À FAIBLE SOLUBILITÉ, COMPOSITIONS OBTENUES ET LEUR UTILISATION DANS LES PRODUITS DE PANIFICATION**

VERFAHREN ZUR HERSTELLUNG VON PROTEINZUSAMMENSETZUNGEN MIT GERINGER LÖSLICHKEIT, IN DIESEM VERFAHREN HERGESTELLTE ZUSAMMENSETZUNGEN UND VERWENDUNG DAVON IN BROTHERSTELLUNGSPRODUKTEN

METHOD FOR PRODUCING PROTEIN COMPOSITIONS OF LOW SOLUBILITY, COMPOSITIONS PRODUCED, AND USE THEREOF IN BREAD-MAKING PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2012 FR 1260284**

(43) Date de publication de la demande:
**02.09.2015 Bulletin 2015/36**

(73) Titulaire: **Roquette Frères**
**62136 Lestrem (FR)**

(72) Inventeurs:
• **BARATA, Manuel**
**F-62920 Gonnehem (FR)**
• **BUREAU, Stéphanie**
**F-62400 Essars (FR)**

(74) Mandataire: **Cabinet Plasseraud**
**66, rue de la Chaussée d'Antin**
**75440 Paris Cedex 09 (FR)**

(56) Documents cités:
| | |
|---|---|
| **EP-A1- 1 351 587** | **EP-A2- 0 522 800** |
| **WO-A1-2007/011948** | **WO-A1-2009/113845** |
| **FR-A1- 2 958 501** | **GB-A- 1 407 773** |
| **JP-A- H04 207 159** | **US-A- 4 178 391** |
| **US-A- 4 391 839** | **US-A1- 2004 071 852** |

Remarques:
Le dossier contient des informations techniques présentées postérieurement au dépôt de la demande et ne figurant pas dans le présent fascicule.

EP 2 911 524 B2

**Description**

La présente invention concerne un procédé de fonctionnalisation d'une composition protéique, par chauffage entre 100 °C et 160 °C dans un temps de 0,1 s à 1 s puis refroidissement entre 60 °C et 90 °C, avec un ajustement du pH à une valeur comprise entre 6,2 et 9 au moyen de chaux. Les compositions protéiques ainsi obtenues, lorsqu'elles sont mises en oeuvre dans la fabrication de pains, permettent de fabriquer des produits sans arrière-goût désagréable ; en outre, ces pains présentent un volume particulièrement important ce qui leur confère un caractère moelleux très marqué. Un tel compromis de performances n'avait jusqu'alors jamais été atteint pour des produits de panification.

Depuis quelques années, l'industrie alimentaire exprime une demande croissante pour des composés d'origine végétale possédant des propriétés nutritionnelles intéressantes, sans pour autant présenter les problèmes d'allergénicité des composés d'origine animale tels que les protéines issues du lait ou des oeufs. A cet égard, la Demanderesse a développé et protégé un procédé de fonctionnalisation de protéines végétales et solubles à travers la Demande de Brevet Française n° 2 958 501.

Une des originalités de ce procédé repose sur la succession d'une étape a) de chauffage très rapide (dans un laps de temps de moins d'une seconde) d'une composition protéique à une température comprise entre 100°C et 160°C puis d'une étape b) de refroidissement. L'étape de chauffe extrêmement rapide permet avantageusement de conserver les propriétés fonctionnelles des protéines tout en inhibant l'activité microbienne. Selon le document précité, les compositions protéiques ainsi fabriquées peuvent être utilisées dans un très large éventail de produits alimentaires.

Fort de cet enseignement, la Demanderesse est parvenue à démontrer qu'un tel procédé pouvait être encore amélioré dans le domaine particulier de la panification, notamment pour augmenter le volume des pains fabriqués et donc améliorer leur caractère moelleux. Ceci ne remet aucunement en cause le contenu de la Demande de Brevet Française précitée, et il s'agit bien là d'un des mérites de la Demanderesse : loin de s'être contentée de l'enseignement et des résultats acquis précédemment, elle a poursuivi ses recherches en vue d'optimiser le procédé objet de la Demande précitée pour fabriquer des pains développant un caractère moelleux exacerbé et ce, sans dégager un arrière-goût rédhibitoire.

Le pain est le résultat de transformations physiques, de réactions chimiques et d'activités biologiques très complexes qui se produisent au sein d'un mélange de farine issue de céréales panifiables, d'eau, de sel et de levure, et parfois d'autres ingrédients (acide ascorbique, farines d'autres origines, enzymes exogènes, émulsifiants...), sous l'action d'un apport contrôlé d'énergie mécanique et thermique.

Pour obtenir du pain, il faut réunir trois composants dont l'action est complémentaire et indissociable : l'amidon qui fournit les sucres, le gluten responsable du fin réseau élastique assurant la cohésion de l'ensemble, et la levure qui -comme son nom l'indique-provoque la levée et l'allègement de la pâte.

Première étape de la fabrication, le pétrissage permet d'obtenir une pâte de consistance déterminée, par pétrissage d'eau, de levure et de farine en présence d'air. C'est une opération dont la bonne conduite conditionne en grande partie la qualité des produits finis. Elle permet de former une pâte homogène, lisse, tenace et viscoélastique à partir de ses deux constituants principaux que sont la farine et l'eau, et au sein de laquelle l'amidon, le gluten et l'air occupent respectivement 60%, 30% et 10% du volume total. Au cours de cette opération, les particules de farine s'hydratent, le mélange perd son caractère humide et granuleux, la pâte se forme, devient lisse, homogène, et s'affermit.

La seconde étape appelée pointage est une étape de repos ou de première fermentation, au cours de laquelle les levures se multiplient. C'est une étape importante pour le développement des propriétés élastiques de la pâte et des futurs arômes du pain. Le gaz carbonique produit par les levures est piégé dans le réseau glutineux, ce qui rend la pâte bien élastique.

Puis vient le temps de la mise en forme, encore appelée « la tourne », qui comporte des opérations mécaniques de pesée, division de la pâte et façonnage des pâtons. Les pâtons façonnés doivent reposer une nouvelle fois. C'est l'apprêt ou seconde fermentation, qui permet l'expansion en volume de la pâte.

Enfin, la dernière phase consiste à la transformation de la pâte fermentée en pain, par enfournement dans un four dont la température est fixée aux alentours de 250°C.

Le gluten occupe un rôle prépondérant dans la fabrication des pâtes, et plus particulièrement dans la fabrication du pain. Il doit d'abord posséder de bonnes capacités à absorber l'eau. Le pâton est le résultat du mélange de farine et d'eau. Les protéines du gluten doivent pouvoir absorber suffisamment d'eau pour former la pâte, qui doit par la suite comporter assez de résistance face au processus de malaxage.

Le gluten doit également pouvoir se montrer extensible. Dans une pâte à pain, durant la fermentation, c'est-à-dire pendant que la pâte lève, il y production de gaz carbonique, suite à la consommation des sucres par les levures. Le gaz produit à l'intérieur de la pâte va étendre la matrice du gluten, constituer des bulles de gaz et permettre à la pâte de lever. Si le gluten n'est pas suffisamment élastique, les bulles de gaz vont éclater et la pâte ne lèvera pas. Le gluten doit enfin faire preuve d'une certaine résistance. C'est cette résistance qui va permettre au gaz de se maintenir dans la pâte jusqu'à ce que le processus de cuisson établisse la structure de la pâte.

Un bon équilibre entre l'élasticité et l'extensibilité est nécessaire pour avoir un gluten de qualité. C'est grâce à lui que se forme le réseau glutineux au cours de la fabrication, permettant d'obtenir au final un pain volumineux et aéré. Le gluten peut ainsi absorber deux à trois fois son propre poids en eau et après hydratation, formant alors le réseau glutineux, réseau élastique, extensible et imperméable.

Travaillant sur la mise en oeuvre du procédé objet de la Demande de Brevet Française n° 2 958 501, la Demanderesse est parvenue à une optimisation conduisant à des pains ayant un volume particulièrement important et donc, présentant un caractère moelleux très marqué. De plus, les pains ainsi obtenus ne présentent pratiquement pas d'arrière-goût. Un tel compromis de propriétés n'avait jamais pu être atteint selon l'art antérieur, comme en témoignent les exemples supportant la présente Demande. Lorsqu'on sait l'importance qu'attache le consommateur final aux propriétés gustatives et au caractère moelleux du pain qu'il achète, on comprend l'utilité et tout l'intérêt du procédé objet de la présente invention, et des compositions protéiques qui en découlent.

L'amélioration de procédé en question repose entre autre sur l'identification d'un paramètre comme une des clés de l'optimisation, puis sur le réglage dudit paramètre. En l'occurrence, il est apparu que l'ajustement du pH était une étape cruciale dudit procédé, et que cet ajustement devait avoir lieu par ajout de chaux. Non seulement, le procédé antérieur ne portait pas d'attention particulière à cette étape d'ajustement de pH, mais il ne divulguait que la soude comme agent rectificateur.

Outre leur aptitude à ne développer aucun arrière-goût notable dans les produits de panification qu'elles servent à fabriquer, les compositions protéiques obtenues par le procédé selon la présente invention permettent de fabriquer des pains présentant des volumes plus importants que ceux obtenus avec les protéines de l'art antérieur en général, et que ceux obtenus avec les protéines particulières de l'art antérieur selon le document n° 2 958 501.

Or, les protéines sont notamment caractérisées par une faible capacité d'adsorption d'eau, une faible solubilité et un faible pouvoir émulsionnant : ces paramètres en constituent la véritable signature. Sans vouloir être liée à une quelconque théorie, la Demanderesse estime que le caractère relativement inerte vis-à-vis de l'eau (tel qu'exprimé à travers les paramètres cités plus haut) des compositions protéiques selon l'invention facilite la formation du réseau glutineux : il en résulte un pain au volume plus important, et au caractère moelleux plus marqué.

Aussi, un premier objet de la présente invention réside dans un procédé consistant à fournir une composition protéique puis :

>    a) à chauffer ladite composition à une température comprise entre 100 °C et 160 °C, dans un temps compris entre 0,1 et 1 seconde,
>
>    b) à refroidir ladite composition entre 50°C et 80°C,

le pH de la composition protéique étant ajusté à une valeur comprise entre 6,2 et 9 avant ou pendant ou après une des 2 étapes a) et b) précitée, l'ajustement du pH ayant lieu par ajout de chaux dans ladite composition.

La composition protéique sur laquelle on applique les étapes a) et b) du procédé selon l'invention est obtenue par toutes les méthodes bien connues de l'homme du métier. On peut notamment commencer par mettre en suspension une farine végétale ou une râpure, s'il s'agit de tubercules végétaux râpés, dans de l'eau. La farine végétale s'entend au sens large, qu'il s'agisse de farine végétale à proprement parlé ou de râpure de tubercules végétaux, notamment de râpure de pommes de terre. En effet, ladite farine végétale peut être issue des céréales, des oléagineux, des légumineuses ou des tubercules, utilisée seule ou en mélanges, choisie dans la même famille ou dans des familles différentes.

L'étape de mise en suspension est suivie d'une extraction de l'amidon et des fibres de manière à obtenir une suspension protéique de 3 % à 15 % de matière sèche en poids. A cette étape cependant, lorsqu'il s'agit du blé ou de la pomme de terre, les protéines sont extraites en premier lieu tandis que l'amidon et les fibres sont extrais dans un second temps. Cette extraction peut consister en tout procédé d'obtention d'un extrait de protéines bien connu de l'homme du métier tel qu'une précipitation isoélectrique ou une imprégnation suivie d'une technique de séparation par tamisage, filtrations, centrifugation ou toute autre technique équivalente.

La précipitation a lieu par abaissement du pH de la composition, notamment par ajout d'acide chlorhydrique. Il est bien entendu que l'ajustement du pH à une valeur comprise entre 6,2 et 9 comme revendiqué, est une opération postérieure à la précipitation par abaissement du pH.

Ainsi préparée, la composition protéique est avantageusement soumise aux étapes a) et b) de fonctionnalisation du procédé selon l'invention. De manière plus particulière, les étapes a) et b) sont précédées par les étapes consistant à :

>    1) mettre une farine végétale en suspension dans l'eau,
>    2) extraire l'amidon et les fibres de ladite farine de manière à obtenir une suspension ayant une teneur en matière sèche comprise entre 3 % et 15 %,
>    3) extraire de ladite suspension un extrait de protéines de matière sèche supérieure à 15 %.

A l'issue de ces étapes 1) à 3, la composition protéique présente une température comprise entre 30°C et 60°C environ.

Le procédé selon l'invention comporte donc une première étape de chauffage a) dans un laps de temps compris entre 0,1 et 1 seconde, avantageusement effectuée par échange thermique avec de la vapeur d'eau. Dans un procédé particulier selon l'invention, l'étape de chauffage a lieu dans une chambre d'injection ou d'infusion, préférentiellement d'infusion. Selon cette dernière variante préférée, la composition protéique est directement envoyée dans la chambre d'infusion. Concrètement, une pompe positive type Moineau (commercialisée sous la marque PCM) transfère la composition protéique dans la chambre d'infusion en assurant une pression et un débit d'alimentation constants et stables. La composition protéique arrive dans la chambre à une température de 30 °C à 60 °C.

L'étape de chauffage est réalisée en dispersant, de façon circulaire, la composition protéique dans de la vapeur d'eau sous pression. Cette étape de chauffage correspond donc à un procédé d'échange direct. La composition protéique coule verticalement et se mélange à la vapeur sans risque de contact avec la paroi chaude de la chambre d'infusion. De manière préférée, la composition protéique est chauffée à une température comprise entre 100 °C et 160 °C en moins de 1 seconde. Lors de cette étape de chauffage, il peut être nécessaire d'assurer un temps de chambrage précis, par exemple de 0,1 à 0,8 seconde, après atteinte de la température désirée. Dans la présente invention, le terme « chambrage » désigne toute opération dans laquelle la composition protéique séjourne à une température comprise entre 100 °C et 160 °C pendant un temps précis.

Après chauffage dans la chambre d'infusion, la composition protéique tombe directement dans une pompe positive (pompe à lobes). A la sortie de la pompe, elle est refroidie selon l'étape b) par détente en transférant rapidement la dispersion chaude dans une chambre de détente sous une pression inférieure à celle utilisée pendant le chauffage ou dans un vase d'expansion pour provoquer un dégagement de vapeur dans une chambre à vide. A cette étape, n'est associée aucune durée particulière.

De manière préférée, l'étape b) de refroidissement est réalisée par abaissement de la pression préférentiellement en-dessous de 300 mbar absolu. Cet abaissement est réalisé typiquement dans un vase d'expansion. Dans cette étape, il est souhaitable d'obtenir une vaporisation maximale et il est possible de choisir des pressions ou dépressions (vide) permettant d'atteindre ce but. Il est ainsi possible de moduler la quantité de l'extrait sec en évaporant une quantité variable d'eau. De manière simultanée, grâce au dégagement de vapeur, on obtient une désodorisation importante.

Cette étape de refroidissement conduit à amener la composition protéique à une température comprise entre 50°C et 80°C.

Le pH de la composition est donc ajusté préalablement ou pendant ou postérieurement à la fonctionnalisation qui consiste en la succession des 2 étapes a) et b) précitées. L'ajustement du pH entre 6,2 et 9 est réalisé par adjonction de chaux dans ladite composition, cette adjonction ayant lieu par tous les moyens et dispositifs bien connus de l'homme du métier.

Après fonctionnalisation, le procédé selon l'invention peut inclure à la suite de l'étape b) une étape optionnelle c) d'homogénéisation par homogénéisateur haute pression ou via une pompe à haut cisaillement. Le procédé selon l'invention peut aussi incorporer à la suite de l'étape b) une étape d) de séchage de manière à obtenir des protéines pulvérulentes. En ce sens, l'étape d) peut suivre directement l'étape b) (absence d'étape d'homogénéisation) ou peut avoir lieu après l'étape c) d'homogénéisation. L'étape de séchage est réalisée selon une technique telle que l'atomisation, la granulation, l'extrusion ou par tout autre moyen de séchage connu de l'homme du métier, et dans des conditions adaptées à l'équipement choisi. De manière préférée, il s'agit d'une étape d'atomisation.

La présente divulgation concerne des compositions protéiques caractérisées en ce qu'elles présentent :

- une capacité d'adsorption d'eau, inférieure à 4 g d'eau par gramme de produit,
- une solubilité, mesurée selon un test A, inférieure à 20 %,
- une capacité émulsionnante, mesurée selon un test B, comprise entre 50 mPa.s et 500 mPa.s.

De manière plus préférée, les compositions protéiques selon la présente divulgation sont caractérisées en ce qu'elles présentent :

- une capacité d'adsorption d'eau, inférieure à 2,5 g d'eau par gramme de produit,
- une solubilité, mesurée selon un test A, inférieure à 15 %,
- une capacité émulsionnante, mesurée selon un test B, comprise entre 50 mPa.s et 250 mPa.s.

La capacité d'adsorption d'eau est déterminée très simplement par double pesée. On prend 10 grammes en poids sec de composition protéique sous forme de poudre, qu'on place dans de l'eau en excès et ce, pendant 30 minutes. On sèche le tout de manière à évaporer l'eau complètement (jusqu'à ne plus noter d'évolution notable de la masse du produit). On pèse alors la masse de produit restante. La capacité d'adsorption d'eau s'exprime en g d'eau adsorbée par gramme de produit sec initial.

La solubilité est mesurée comme suit selon le test A. Ce test de solubilité consiste à déterminer la teneur en matières solubles dans l'eau à pH 7,5 par une méthode de dispersion d'une prise d'essai de l'échantillon de protéines dans de l'eau distillée et analyse du surnageant obtenu après centrifugation. Dans un bécher de 400 ml, on introduit une prise d'essai de 2,0 g d'échantillon et un barreau aimanté (référence on ajoute N°ECN 442-4510 / société VWR). On tare le tout puis on ajoute 100,0 g d'eau distillée à 20°C +- 2°C. On ajuste le pH à 7,5 avec HCl 1N ou NaOH 1 N et on complète à 200,0 g exactement avec de l'eau distillée. On agite pendant 30 minutes puis on centrifuge 15 minutes à 3000 g. Après centrifugation, on prélève exactement 25,0 g de surnageant dans un cristallisoir préalablement taré. On place à l'étuve à 103°C jusqu'à masse constante.

La solubilité est calculée à partir de l'équation suivante :

$$\text{Solubilité} = \frac{(m1-m2) \times 200 \times 100}{m3 \times P}$$

avec m1 = masse en g du cristallisoir après séchage
m2 = masse en g du cristallisoir vide
m3 = masse en g de surnageant repris
P = masse en g de la prise d'essai échantillon.

Dans la présente divulgation, la capacité émulsionnante est mesurée selon le test B ci-après. On prépare une suspension protéique en incorporant 50 g d'échantillon dans 250 g d'eau distillée à 20°C +- 2°C sous agitation forte pendant 2 min à une vitesse de 250 tours / minute. On incorpore à la suspension 250 g d'huile de tournesol en filet en 30 secondes toujours sous agitation forte à une vitesse de 250 tours / minute et on laisse sous agitation durant 2,5 minutes. On ajoute 11 g de sel fin de cuisine au mélange protéines/eau/huile. On poursuite l'agitation pendant 30 secondes à 250 tours / minute.

On remplit ensuite 3 boîtes de conserve avec le mélange protéines/eau/huile/sel, boîtes qui sont serties. La première boîte est placée à 4°C +- 2°C au réfrigérateur durant 24h, puis on détermine sa viscosité Brookfield (Brookfield hélipath - vitesse de rotation : 5 tours / minute) à 20°C +- 2°C. C'est cette mesure qui correspond à la capacité émulsionnante selon le test B.

La seconde boîte est pasteurisée 1 h30 au bain-marie à 75°C +- 2°C puis placée dans un bassin d'eau froide pendant 1h et stockée à 4°C +- 2°C au réfrigérateur durant 24h ; on détermine ensuite sa viscosité Brookfield (Brookfield hélipath - vitesse de rotation : 5 tours / minute) à 20°C +- 2°C.

La troisième boîte est stérilisée pendant 1h en autoclave à 120°C puis placée dans un bassin d'eau froide pendant 1h et stockée à 4°C +- 2°C au réfrigérateur durant 24h ; on détermine ensuite sa viscosité Brookfield (Brookfield hélipath - vitesse de rotation : 5 tours / minute) à 20°C +- 2°C.

Selon un mode préférentiel de la présente invention, la protéine végétale appartient aux protéines de légumineuses. Selon un autre mode préférentiel, la protéine de légumineuse est choisie dans le groupe comprenant le pois, le haricot, la fève et la fèverole, et leurs mélanges. De manière encore plus préférée, ladite protéine de légumineuse est la protéine de pois. Le terme « pois » est ici considéré dans son acception la plus large et inclut en particulier : - toutes les variétés sauvages de « pois lisse » (« smooth pea »), et - toutes les variétés mutantes de « pois lisse » et de « pois ridé » (« wrinkled pea ») et ce, quelles que soient les utilisations auxquelles on destine généralement lesdites variétés (alimentation humaine, nutrition animale et/ou autres utilisations).

La présente divulgation concerne également est l'utilisation des compositions protéiques précitées, dans un procédé de fabrication de pains.

La présente divulgation concerne également en un pain obtenu par mise en oeuvre d'une composition protéique selon la divulgation.

Les exemples qui suivent permettront de mieux illustrer la Demande, sans toutefois en limiter la portée.

**EXEMPLES**

**Exemple 1**

Cet exemple illustre 4 procédés de fabrication de compositions protéiques :

- un procédé selon l'art antérieur, sans montée rapide en température, et avec ajustement du pH avec de la soude
- un procédé selon l'art antérieur, sans montée rapide en température, et avec ajustement du pH avec de la chaux
- un procédé selon l'art antérieur (comme décrit dans la Demande n° FR 2958501) par chauffage rapide (< 1 s) puis refroidissement, et avec ajustement du pH avec de la soude

- un procédé selon l'invention par chauffage rapide (< 1 s) puis refroidissement, et avec ajustement du pH avec de la chaux

Il illustre les compositions protéiques ainsi obtenues et certaines de leurs caractéristiques (comme leur solubilité, leur capacité d'adsorption d'eau, leur capacité émulsionnante).

Essai n° 1 selon l'art antérieur : procédé classique sans traitement thermique et rectification à la soude

On prépare une composition de protéines de pois de la manière suivante.
De la farine de pois est préparée par broyage de pois fourragers décortiqués sur broyeur à marteaux de type ALPINE équipé d'une grille de 100 $\mu$m. 300 kg de farine à 87 % de matière sèche sont ensuite mis à tremper dans de l'eau à la concentration finale de 25 % sur sec, à un pH de 6,5. 1 044 kg de suspension de farine à 25 % de matière sèche (soit donc 261 kg de farine sèche) sont alors introduits avec 500 kg d'eau dans une batterie d'hydrocyclones de 14 étages, alimentée par la suspension de farine à l'étage n° 5.

Cette séparation conduit à l'obtention d'une phase légère qui correspond à la sortie de l'étage n° 1. Elle est constituée du mélange protéines, fibres internes et solubles. Cette phase légère en sortie d'hydrocyclones renferme en mélange (142 kg sur sec au total) : les fibres (environ 14,8 % en poids, soit 21 kg sec), les protéines (environ 42,8 % en poids, soit 60,8 kg sec) et de solubles (environ 42,4 % en poids, soit 60,2 kg sec). Cette fraction présente une matière sèche de 10 %.

On procède à la séparation des fibres sur décanteurs centrifuges de type WESPHALIA. La phase légère en sortie de décanteur centrifuge renferme un mélange de protéines et de solubles, tandis que la phase lourde renferme les fibres de pois. La phase lourde renferme 105 kg de fibres à 20 % de matière sèche. On constate que la quasi-totalité des fibres est bien retrouvée dans cette fraction. Quant à la fraction protéines et solubles, elle renferme 1 142 kg d'un mélange en solution de solubles et de protéines (fraction à 6 % de matière sèche).

On procède à la floculation des protéines à leur point isoélectrique par ajustement de la phase légère en sortie de décanteur centrifuge à un pH de 4,5 (par ajout d'acide chlorhydrique) et chauffage à 60°C par passage en tuyère. Les protéines ainsi mises à floculer sont laissées 10 minutes en cuve de maturation.

On procède ensuite à la séparation solubles / protéines sur décanteur centrifuge. Le mélange obtenu en sortie de la cuve de maturation alimente alors la décanteuse centrifuge à un débit de 0,5 m3/h. La phase lourde, ou « floc », d'une matière sèche de 35 % est diluée à 10 % par ajout d'eau. Le pH du floc de 4,5 est rectifié à une valeur de 7,5 par ajout de soude.

On procède enfin à une atomisation sur tour de type simple effet à buse à air comprimé pour sécher le produit, avec une température de l'air de séchage de 150°C, une température des buées de 85°C, la capacité d'évaporation étant de 20 l/h et la pression : 1 bar. On obtient une composition protéique sous forme de poudre dite composition protéique 1.

Essai n° 2 selon l'art antérieur : procédé classique sans traitement thermique et rectification à la chaux

Le procédé est en tout point identique à celui décrit dans l'essai n° 2, à la seule différence que le pH du floc de 4,5 est rectifié à une valeur de 7,5 par ajout de chaux. On obtient une composition protéique sous forme de poudre dite composition protéique 2.

Essai n° 3 selon l'art antérieur : chauffage rapide (< 1 s) puis refroidissement et rectification à la soude

Le procédé est ici identique à celui décrit dans l'essai n°1, jusqu'à l'obtention de la phase lourde. Le pH de 4,5 de l'extrait protéique est rectifié à une valeur de 7,5 par ajout de soude.

On procède sur l'extrait protéique ainsi obtenu à un traitement thermique de 122°C pendant 0,2 s dans une chambre d'infusion ou infuseur Simplex type SDH puis on refroidit à 45,5°C par détente dans un vase d'expansion sous vide ou flash cooling.

On procède enfin à une atomisation sur tour MSD (Multi Stage Dryer) dans les conditions suivantes. On choisit une tour d'atomisation MSD et on l'alimente avec les protéines de pois issues de l'infuseur Simplex. L'air de séchage entre à 180°C et ressort à 80°C, le lit statique en bas de la tour étant réchauffé par de l'air à 80°C. En sortie de la tour d'atomisation, le produit passe sur un lit fluide vibré où il est refroidi à température ambiante. On peut procéder avantageusement au recyclage des fines.

L'ensemble de ces opérations permet l'obtention d'une poudre de protéines de pois selon l'art antérieur, présentant un diamètre moyen de 200 $\mu$m et une densité moyenne de 0,4. On obtient une composition protéique sous forme de poudre dite composition protéique 3.

Essai n° 4 selon l'invention : chauffage rapide (< 1 s) et refroidissement puis rectification à la chaux

Le procédé est en tout point identique à celui décrit dans l'essai n° 3, à la seule différence que le pH du floc de 4,5 est rectifié à une valeur de 7,5 par ajout de chaux. L'ensemble des opérations permet l'obtention d'une poudre de protéines de pois conforme à l'invention, présentant un diamètre moyen de 200 $\mu$m et une densité moyenne de 0,4. On obtient une composition protéique sous forme de poudre dite composition protéique 4.

Essai n° 5 selon l'invention : chauffage rapide (< 1 s) et refroidissement puis rectification à la chaux

Le procédé est celui décrit dans l'essai n° 4, mais en diffère en ce que :

- le traitement thermique de l'extrait protéique est réalisé à 135°C pendant 0,4 s puis on refroidit à 50°C ;
- le pH du floc de 4,5 est rectifié à une valeur de 6,6 par ajout de chaux.

L'ensemble des opérations permet l'obtention d'une poudre de protéines de pois conforme à l'invention, présentant un diamètre moyen de 200 $\mu$m et une densité moyenne de 0,4. On obtient une composition protéique sous forme de poudre dite composition protéique 5.

Essai n° 6 selon l'invention : chauffage rapide (< 1 s) et refroidissement puis rectification à la chaux

Le procédé est celui décrit dans l'essai n° 4, mais en diffère en ce que :

- le traitement thermique de l'extrait protéique est réalisé à 135°C pendant 0,9 s puis on refroidit à 70°C ;
- le pH du floc de 4,5 est rectifié à une valeur de 7 par ajout de chaux.

L'ensemble des opérations permet l'obtention d'une poudre de protéines de pois conforme à l'invention, présentant un diamètre moyen de 200 $\mu$m et une densité moyenne de 0,4. On obtient une composition protéique sous forme de poudre dite composition protéique 6.

Essai n° 7 selon l'invention : chauffage rapide (< 1 s) et refroidissement puis rectification à la chaux

Le procédé est celui décrit dans l'essai n° 4, mais en diffère en ce que :

- le traitement thermique de l'extrait protéique est réalisé à 135°C pendant 0,9 s puis on refroidit à 80°C ;

L'ensemble des opérations permet l'obtention d'une poudre de protéines de pois conforme à l'invention, présentant un diamètre moyen de 200 $\mu$m et une densité moyenne de 0,4. On obtient une composition protéique sous forme de poudre dite composition protéique 7.

Essai n° 8 selon l'invention : chauffage rapide (< 1 s) et refroidissement puis rectification à la chaux

Le procédé est celui décrit dans l'essai n° 4, mais en diffère en ce que :

- le traitement thermique de l'extrait protéique est réalisé à 150°C pendant 0,9 s puis on refroidit à 70°C ;
- le pH du floc de 4,5 est rectifié à une valeur de 9 par ajout de chaux.

L'ensemble des opérations permet l'obtention d'une poudre de protéines de pois conforme à l'invention, présentant un diamètre moyen de 200 $\mu$m et une densité moyenne de 0,4. On obtient une composition protéique sous forme de poudre dite composition protéique 8.

Essai n° 9 selon l'invention : chauffage rapide (< 1 s) et refroidissement puis rectification à la chaux

Le procédé est celui décrit dans l'essai n° 4, mais en diffère en ce que :

- le traitement thermique de l'extrait protéique est réalisé à 145°C pendant 0,2 s puis on refroidit à 70°C ;
- le pH du floc de 4,5 est rectifié à une valeur de 7 par ajout de chaux.

L'ensemble des opérations permet l'obtention d'une poudre de protéines de pois conforme à l'invention, présentant un diamètre moyen de 200 μm et une densité moyenne de 0,4. On obtient une composition protéique sous forme de poudre dite composition protéique 9.

Essai n° 10 selon l'invention : chauffage rapide (< 1 s) et refroidissement puis rectification à la chaux

Le procédé est celui décrit dans l'essai n° 4, mais en diffère en ce que :

- le traitement thermique de l'extrait protéique est réalisé à 122°C pendant 0,3 s puis on refroidit à 55°C ;
- le pH du floc de 4,5 est rectifié à une valeur de 8 par ajout de chaux.

L'ensemble des opérations permet l'obtention d'une poudre de protéines de pois conforme à l'invention, présentant un diamètre moyen de 200 μm et une densité moyenne de 0,4. On obtient une composition protéique sous forme de poudre dite composition protéique 9.
Le tableau 1 ci-après récapitule les valeurs de la capacité d'adsorption d'eau, de solubilité mesurée selon le test A et de capacité émulsionnante mesurée selon le test B. En outre, on a aussi fait apparaître les valeurs des viscosités Brookfield mesurées dans le test B, au sujet de la deuxième boîte (pasteurisée à 75°C) et de la troisième boîte (stérilisée à 120°C).
Il ressort de ce tableau des caractéristiques tout à fait singulières et distinctives de la composition protéique selon l'invention qui présente en l'occurrence : une faible solubilité, une faible capacité d'adsorption d'eau et une faible capacité émulsionnante.

## Tableau 1

|  | Essai 1 | Essai 2 | Essai 3 | Essai 4 | Essai 5 |
|---|---|---|---|---|---|
| Absorption d'eau | 4,4 | 2,5 | 4,8 | 2,4 | 2,6 |
| Solubilité (g / g) | 54,9 | 13,5 | 55,0 | 13,1 | 12,5 |
| Capacité émulsionnante selon test B (mPa.s) | 74 000 | 3 000 | 1 000 000 | 1560 | 1280 |
| Emulsion 75°C | 10 000 | 5 200 | 1 000 000 | 4700 | 1720 |
| Emulsion 120°C | 150 000 | 21 000 | 280 000 | 10000 | 12000 |

|  | Essai 6 | Essai 7 | Essai 8 | Essai 9 | Essai 10 |
|---|---|---|---|---|---|
| Absorption d'eau | 2,6 | 2,5 | 3,4 | 4,2 | 2,7 |
| Solubilité (g / g) | 10,5 | 13 | 19,7 | 14,7 | 12,9 |
| Capacité émulsionnante selon test B (mPa.s) | 1600 | 1320 | 1540 | 1440 | 1280 |
| Emulsion 75°C | 8000 | 3960 | 3340 | 2560 | 3520 |
| Emulsion 120°C | 9200 | Non réalisé | Non réalisé | Non réalisé | Non réalisé |

### Exemple 2

Cet exemple illustre la fabrication de pains selon l'art antérieur (pains A, B et C réalisés avec les compositions protéiques obtenues selon les essais n° 1 à 3 et d'un pain selon l'invention (pain D mettant en oeuvre la composition protéique obtenue selon l'essai n° 4). La composition de chaque pâte est indiquée dans le tableau 2 suivant.

On introduit les différents ingrédients dans le pétrin qui consiste en un mélangeur spirale. On pétrit pendant 2 minutes à vitesse 1 puis pendant 1,8 minutes à vitesse 2. On laisse reposer la pâte pendant 15 minutes. Celle-ci est ensuite découpée et façonnée et on laisse reposer les pâtons 15 minutes. On réalise ainsi 5 pâtons différents pour chaque pain A, B, C et D. On réalise la pousse en étuve pendant 1h30, à 30°C et à 85% d'humidité relative. On cuit enfin à 220°C pendant 30 minutes.

Les volumes des pains sont ensuite mesurés à partir d'un volumètre à sésame, dispositif bien connu de l'homme du métier (on pourra notamment se reporter au document EP 1 067 841 A1. Les volumes sont mesurés toutes les 15 minutes. On calcule au final l'accroissement de volume (% d'accroissement du volume du pâton par rapport à son volume initial).

**Tableau 2**

|  | Pain A | Pain B | Pain C | Pain D |
|---|---|---|---|---|
| Farine de blé | 830 | 830 | 830 | 830 |
| Gluten | 70 | 70 | 70 | 70 |
| Composition protéique 1 | 100 | - | - | - |
| Composition protéique 2 | - | 100 | - | - |
| Composition protéique 3 | - | - | 100 | - |
| Composition protéique 4 | - | - | - | 100 |
| Sel | 18 | 18 | 18 | 18 |
| Levure sèche | 7 | 7 | 7 | 7 |
| Acide ascorbique | 0,2 | 0,2 | 0,2 | 0,2 |
| Nutrilife AM17 | 0,2 | 0,2 | 0,2 | 0,2 |
| Eau (20°C) | 715 | 715 | 715 | 715 |

Pour chaque pain A, B, C et D, on réalise la moyenne des 5 mesures d'accroissement de volume de manière à obtenir un accroissement moyen de volume; cet accroissement moyen de volume (%) est indiqué dans le tableau 3.

**Tableau 3**

|  | Pain A | Pain B | Pain C | Pain D |
|---|---|---|---|---|
| Accroissement de volume moyen (%) | 155 | 174 | 165 | 175 |

Les pains B et D obtenus avec les compositions protéiques 2 et 3 (rectification du pH avec de la chaux) se démarquent par un volume plus important. En outre, on constate un caractère moelleux plus marqué.
Enfin, on a demandé à 15 personnes de gouter les pains A, B, C et D tout en leur attribuant une note, en fonction de l'arrière-goût qu'ils présentent : 0 pour une absence d'arrière-goût, 2 pour un arrière-goût marqué, et 1 pour la présence d'un léger arrière-goût. Le tableau 4 rapporte l'ensemble des notes obtenues.

**Tableau 4**

| Testeur | Pain A | Pain B | Pain C | Pain D |
|---|---|---|---|---|
| 1 | 1 | 1 | 0 | 0 |
| 2 | 1 | 1 | 0 | 0 |
| 3 | 1 | 1 | 0 | 0 |
| 4 | 1 | 1 | 0 | 0 |
| 5 | 1 | 1 | 0 | 0 |
| 6 | 1 | 1 | 0 | 0 |
| 7 | 0 | 1 | 0 | 0 |
| 8 | 2 | 2 | 1 | 0 |
| 9 | 1 | 2 | 1 | 1 |
| 10 | 0 | 1 | 0 | 0 |
| 11 | 1 | 1 | 0 | 0 |
| 12 | 1 | 1 | 0 | 0 |
| 13 | 2 | 2 | 1 | 0 |
| 14 | 2 | 2 | 1 | 1 |

(suite)

| Testeur | Pain A | Pain B | Pain C | Pain D |
|---------|--------|--------|--------|--------|
| 15 | 2 | 2 | 1 | 1 |

Seuls les pains C et D ne font pas état de la présence notable d'arrière-goût. Par conséquent, seul le pain D qui met en oeuvre la composition protéique 4 présente avantageusement un volume et donc un moelleux important, sans pour autant manifester un arrière-goût prononcé.

**Revendications**

1. Procédé consistant à fournir une composition protéique puis :

a) à chauffer ladite composition à une température comprise entre 100 °C et 160 °C, dans un temps compris entre 0,1 et 1 seconde,
b) à refroidir ladite composition entre 50°C et 80°C,

le pH de la composition protéique étant ajusté à une valeur comprise entre 6,2 et 9 avant ou pendant ou après une des 2 étapes a) et b) précitée, l'ajustement du pH ayant lieu par ajout de chaux dans ladite composition.

2. Procédé selon la revendication 1, **caractérisé en ce que** les étapes a) et b) sont précédées par les étapes consistant à :

1) mettre une farine végétale en suspension dans l'eau,
2) extraire l'amidon et les fibres de ladite farine de manière à obtenir une suspension ayant une teneur en matière sèche comprise entre 3 % et 15 %,
3) extraire de ladite suspension un extrait de protéines de matière sèche supérieure à 15%.

3. Procédé selon une des revendications 1 à 2, **caractérisé en ce que** l'étape de chauffage a) est effectuée par échange thermique avec de la vapeur d'eau.

4. Procédé selon la revendication 3, **caractérisé en ce que** l'étape de chauffage a lieu dans une chambre d'injection ou d'infusion, préférentiellement d'infusion.

5. Procédé selon une des revendications 1 à 4, **caractérisé en ce que** l'étape b) de refroidissement est réalisée par abaissement de la pression préférentiellement en-dessous de 300 mbar absolu.

6. Procédé selon une des revendications 1 à 5, **caractérisé en ce que** l'étape b) est suivie d'une étape c) d'homogénéisation par homogénéisateur haute pression ou via une pompe à haut cisaillement.

7. Procédé selon une des revendications 1 à 6, **caractérisé en ce que** l'étape b) est suivie d'une étape d) de séchage réalisée par atomisation, granulation, ou extrusion et préférentiellement par atomisation.

**Patentansprüche**

1. Verfahren, bestehend aus Bereitstellen einer Proteinzusammensetzung und anschließend::

a) Erwärmen besagter Zusammensetzung auf eine Temperatur zwischen 100°C und 160°C innerhalb eines Zeitraums zwischen 0, 1 und 1 Sekunde,
b) Abkühlen besagter Zusammensetzung auf 50°C bis 80°C,

wobei der pH der Proteinzusammensetzung auf einen Wert zwischen 6,2 und 9 vor oder während oder nach einem der beiden zuvor angeführten Schritte a) und b) eingestellt wird, wobei die Einstellung des pH mittels Zugabe von Kalk in besagte Zusammensetzung geschieht.

**2.** Verfahren gemäß Anspruch 1, **dadurch gekennzeichnet, dass** den Schritten a) und b) die Schritte vorausgehen, bestehend aus:

1) Suspendieren eines pflanzlichen Mehls in Wasser,
2) Extrahieren der Stärke und der Fasern des besagten Mehls, um eine Suspension mit einem Trockenmassegehalt zwischen 3% und 15% zu erhalten,
3) Extrahieren eines Proteinextraktes mit einer Trockenmasse von mehr als 15% aus besagter Suspension.

**3.** Verfahren gemäß einem der Ansprüche 1 bis 2, **dadurch gekennzeichnet, dass** der Erwärmungsschritt a) mittels Wärmeaustausch mit Wasserdampf durchgeführt wird.

**4.** Verfahren gemäß Anspruch 3, **dadurch gekennzeichnet, dass** der Erwärmungsschritt in einer Injektions- oder Infusionskammer, vorzugsweise Infusionskammer, stattfindet.

**5.** Verfahren gemäß einem der Ansprüche 1 bis 4, **dadurch gekennzeichnet, dass** der Abkühlungsschritt b) durch Druckabsenkung vorzugsweise unter 300 mbar absolut erfolgt.

**6.** Verfahren gemäß einem der Ansprüche 1 bis 5, **dadurch gekennzeichnet, dass** auf Schritt b) ein Homogenisierungsschritt c) mit einem Hochdruckhomogenisator oder mithilfe einer Hochscherpumpe folgt.

**7.** Verfahren gemäß einem der Ansprüche 1 bis 6, **dadurch gekennzeichnet, dass** auf Schritt b) ein Trocknungsschritt d) folgt, der durch Sprühen, Granulieren oder Extrudieren und vorzugsweise durch Sprühen erfolgt.

**Claims**

**1.** A process consisting in providing a protein composition, and then:

a) In heating said composition to a temperature of between 100°c and 160°C, in a period of time of between and 1 second,
b) in cooling said composition between 50°C and 80°C,

the pH of the protein composition being adjusted to a value of between 6.2 and 9 before or during or after one of the 2 steps a) and b) mentioned above, the pH adjustment being carried out by adding lime to said composition.

**2.** The process as claimed in claim 1, **characterized in that** steps a) and b) are preceded by the steps consisting in:

1) suspending a vegetable flour in water,
2) extracting the starch and the fibers from said flour so as to obtain a suspension with a dry matter content of between 3% and 15%,
3) extracting from said suspension a protein extract with a dry matter content of greater than 15%.

**3.** The process as claimed in either of claims 1 and 2, **characterized in that** the heating step a) is carried out by heat exchange with water vapor.

**4.** The process as claimed in claim 3, **characterized in that** the heating step is carried out in an injection or infusion chamber, preferably infusion chamber.

**5.** The process as claimed in one of claims 1 to 4, **characterized in that** the cooling step b) is carried out by lowering the pressure preferentially below 300 mbar absolute.

**6.** The process as claimed in one of claims 1 to5, **characterized in that** step b) is followed by a step c) of homogenization using a high-pressure homogenizer or via a high-shear pump.

**7.** The process as claimed in one of claims 1 to 6, **characterized in that** step b) is followed by a drying step d) carried out by spray-drying, granulation or extrusion and preferentially by spray-drying.

**EP 2 911 524 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2958501
- WO 2958501 A
- EP 1067841 A1